**Europäisches Patentamt**

**European Patent Office**

**Office européen des brevets**

(19)

(11) Veröffentlichungsnummer : **0 324 814 B1**

(12)

# EUROPÄISCHE PATENTSCHRIFT

(45) Veröffentlichungstag der Patentschrift :
**15.04.92 Patentblatt 92/16**

(51) Int. Cl.$^5$ : **B62K 9/00**

(21) Anmeldenummer : **88905697.4**

(22) Anmeldetag : **07.07.88**

(86) Internationale Anmeldenummer :
**PCT/DE88/00429**

(87) Internationale Veröffentlichungsnummer :
**WO 89/00126 12.01.89 Gazette 89/02**

(54) **ROLLGERÄT FÜR KLEINKINDER.**

(30) Priorität : **07.07.87 DE 3722442**

(43) Veröffentlichungstag der Anmeldung :
**26.07.89 Patentblatt 89/30**

(45) Bekanntmachung des Hinweises auf die
Patenterteilung :
**15.04.92 Patentblatt 92/16**

(84) Benannte Vertragsstaaten :
**AT BE CH DE FR GB IT LI NL SE**

(56) Entgegenhaltungen :
**DE-A- 2 401 343**
**GB-A- 1 575 651**
**US-A- 3 035 849**
**US-A- 3 069 182**

(73) Patentinhaber : **HEUBL, Ulrike**
**An der Pilzbuche 116**
**W-7900 Ulm (DE)**

(72) Erfinder : **HEUBL, Ulrike**
**An der Pilzbuche 116**
**W-7900 Ulm (DE)**

(74) Vertreter : **Haft, Berngruber, Czybulka**
**Hans-Sachs-Strasse 5**
**W-8000 München 5 (DE)**

EP 0 324 814 B1

## Beschreibung

Die Erfindung bezieht sich auf ein Rollgerät für Kleinkinder.

Ein solches Rollgerät ist in der US-A- 1 572 273 beschrieben. Dieses Rollgerät weist eine auf Räder abgestützte Schale auf, auf der das Kleinkind bäuchlings liegt. Um ein Herunterrollen des Kleinkindes zu verhindern, sind seitliche Wülste vorgesehen. Zusätzlich kann das Kleinkind noch durch einen Gurt im Bereich der Wülste gesichert werden. Die Schale verjüngt sich an ihrem hinteren Ende, so daß ein nach rückwärts weisender Fortsatz gebildet wird, an dessen Seite die Füße des Kleinkindes vorbeigreifen und auf den Boden gelangen. Ein ähnlicher Fortsatz ist an der Vorderseite der Schale vorgesehen, der sich nach vorne verjüngt. Das Kleinkind kann mit den Händen an den Seiten des vorderen Fortsatzes vorbeigreifen und gelangt mit den Händen bis zum Boden. Durch Strampelbewegungen mit den Beinen und Greifbewegungen mit den Armen kann das Kleinkind das Rollgerät nach vorwärts bewegen. Dieses Rollgerät kann für Kleinkinder ab einem Alter von sechs Monaten verwendet werden.

Dieses Rollgerät ist jedoch nur bedingt für den gewollten Zweck einsetzbar. So ist z.B. die Schale insgesamt schräg gestellt, so daß ein Kleinkind trotz des Gurtes nach hinten abrutschen kann. Wird der Gurt andererseits so festgezogen, daß ein Abrutschen möglichst vermieden wird, so fühlt sich das Kleinkind eingeengt. Außerdem ist die Beinfreiheit durch die scharfen Einschnitte zwischen Schale und rückwärtigem Fortsatz merklich behindert. Weiterhin besteht die Gefahr, daß sich das Kleinkind beim Anfahren gegen Gegenstände im Bereich der Hände verletzen kann. Es ist zwar vorgesehen, am vorderen Teil des vorderen Fortsatzes z.B. einen Pferdekopf anzuordnen, der die Funktion eines Stoßfängers übernimmt; jedoch wird dadurch die Sicht des Kindes behindert, und außerdem kann sich das Kind selbst am Pferdekopf zumindest weh tun.

Ein wichtiger Punkt, der gegen dieses Rollgerät spricht, ist auch die Einbeziehung der Arme in die Fortbewegung. Bei Kleinkindern mit einem Alter von wenigen Wochen ist eine koordinierte Betätigung von Beinen und Armen noch nicht gegeben. Ferner erfolgt die Kontrolle der Kopfbewegungen bei Kleinkindern im wesentlichen durch das Aufstützen der Arme, so daß bei dem bekannten Rollgerät höchstens eine Bewegung des Kopfes dann möglich ist, wenn das Kleinkind die Arme mit den genannten Risiken auf dem Boden hält.

Auf der anderen Seite ist es bekannt, daß Kleinkinder schon im Alter von vier Wochen und früher einen deutlichen Fortbewegungsdrang aufweisen und bereits eine Art Krabbelbewegung durchführen, so daß der Erfindung die Aufgabe zugrundeliegt, ein Rollgerät der in Rede stehenden Art so zu gestalten, daß ein Kleinkind selbst in diesem Alter in der Lage ist, sich mit Hilfe des Rollgerätes selbständig vorwärts zu bewegen und ohne Anweisungen und ohne Gefährdung seine Umgebung erkunden kann.

Diese Aufgabe ist gemäß der Erfindung durch die im kennzeichnenden Teil des Patentanspruches 1 angegebenen Merkmale gelöst.

Demgemäß besteht das Rollgerät aus einer der Körperform des bäuchlings liegenden Kleinkinds entsprechende geformten Schale, die im vorderen Bereich eine große den Konturen eines Ovals folgende Auflagefläche für die Hände aufweist, die sich nach hinten annähernd kontinuierlich bis in den rückwärtigen Fortsatz verengt. Der Übergangsbereich ist leicht nach hinten abfallend ausgebildet, und dient als Stützfläche für die Bauch- und Brustpartie des Kleinkindes. Durch die Anstellung der Stützfläche wird ein Aufstützen der Hände und eine Kontrolle der Kopfbewegungen erleichtert. Die Beine umgreifen den rückwärtigen Fortsatz und reichen bis auf den Boden, so daß das Kleinkind sich durch Strampelbewegungen selbständig nach vorne bewegt. Durch den fließenden Übergang zwischen der Auflagefläche für die Hände und dem rückwärtigen Fortsatz werden die Beinbewegungen des Kleinkindes nicht behindert.

Durch die angegebene Form der Schale des Rollgerätes liegt das Kind bäuchlings in physiologisch einwandfreier Haltung auf dem Rollgerät. Die große Auflagefläche für die Hände verhindert es, daß das Kind beim Anstoßen an Gegenstände verletzt wird. Der vordere und seitliche Bereich der großen Auflageschale dienen hierbei als Stoßfänger. Außerdem kann vorgesehen sein, im Bereich dieser Auflagefläche noch einen Griffwulst vorzusehen, an dem das Kind sich festhalten kann. Dieser Griffwulst ist gegenüber dem äußeren Rand der Schale nach innen versetzt, so daß eine Verletzungsgefahr ausgeschieden wird. Die breite Auflagefläche für die Hände verhindert es auch, daß das Kind über den seitlichen Rand hinausgreifen kann und z.B. durch Überrollen der Hände durch die Räder verletzt wird. Zusätzlich sind im Übergangsbereich zwischen der vorderen Auflagefläche für die Hände und dem rückwärtigen Fortsatz noch seitliche Wülste vorgesehen, die ein seitliches Herunterrollen des Kleinkindes von dem Rollgerät verhindern. Diese Wülste können noch in den Bereich der Auflagefläche für die Hände geführt sein, so daß ein seitliches Hinausgreifen des Kleinkindes über den Rand der Schale in jedem Falle zuverlässig verhindert wird.

Das hintere Ende des rückwärtigen Fortsatzes kann noch mit einer Erhebung versehen sein, die zum einen das Abrutschen des Kleinkindes nach hinten zuverlässig verhindert und andererseits auch eine gute Kraftübertragung zwischen der Beinwegung und dem Rollgerät vermittelt.

Weitere Ausgestaltungen der Erfindung gehen aus den Unteransprüchen hervor.

Die Erfindung ist in Ausführungsbeispielen anhand der Zeichnung näher erläutert. Es zeigen:

Fig. 1 eine perspektivische Ansicht eines Rollgerätes gemäß der Erfindung mit der Andeutung eines bäuchlings daraufliegenden Kleinkindes;

Fig. 2 einen Längsschnitt durch das Rollgerät;

Fig. 3 eine Aufsicht auf das Rollgerät mit der angedeuteten Lage der Räder;

Fig. 4 eine schematische Darstellung einer Ausführungsform für die Vorderräder;

Fig. 5 ein Detail aus Fig. 4 und

Fig. 6 die schematische Darstellung eines lenkbaren Vorderrades.

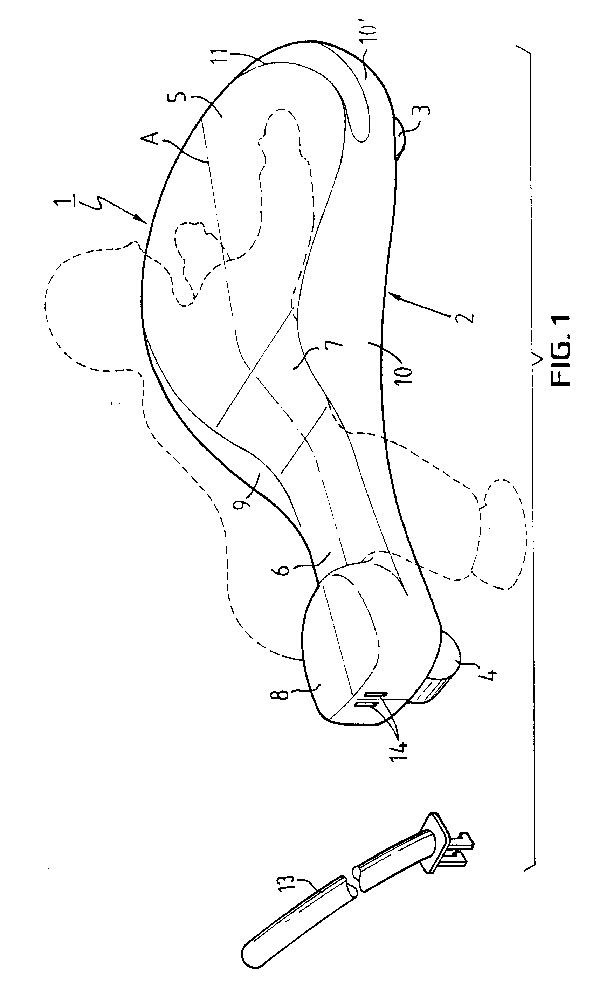

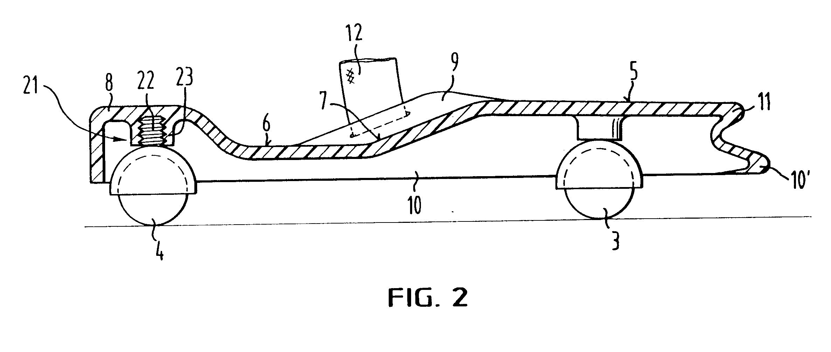

Ein in Fig. 1 dargestelltes Rollgerät 1 weist eine Schale 2 auf, die im vorderen Bereich durch zwei Vorderräder 3 und im hinteren Bereich durch ein Hinterrad 4 abgestützt ist. Die Schale 2, die vorzugsweise aus Kunststoff gefertigt ist, hat in der Aufsicht gemäß Fig. 2 etwa die Form eines Längsschnittes durch eine Birne und weist im vorderen Bereich eine etwa horizontal verlaufende Auflagefläche 5 für die Hände des Kleinkindes auf, die der Kontur eines Ovales folgt, wobei in diesem Falle die große Achse des Ovales senkrecht zur Mittellängsachse A des Rollgerätes verläuft. Das hintere Ende der Schale 2 wird durch einen rückwärtigen schmalen Fortsatz 6 gebildet, dessen Oberfläche ebenfalls etwa horizontal verläuft. Die Oberfläche dieses Fortsatzes liegt jedoch tiefer als die Auflagefläche 5. Die Auflagefläche 5 und der rückwärtige Fortsatz 6 werden durch eine leicht ansteigende und sich allmählich verbreiternde Stützfläche 7 miteinander verbunden, deren Außenkontur stetig in die Ovalkontur der Auflagefläche 1 übergeht. Am hinteren Ende des rückwärtigen Fortsatzes 6 ist noch eine Erhebung 8 vorgesehen. Die Stützfläche 7 ist durch nach oben weisende seitliche Wülste 9 begrenzt, die sich zumindest zum Teil noch in den Bereich der vorderen Auflagefläche 5 und des rückwärtigen Fortsatzes 6 erstrecken.

Liegt das Kleinkind, wie in Fig. 1 angedeutet, auf dem Rollgerät, so wird die Brust- und Bauchpartie des Kleinkindes durch die Stützfläche 7 abgestützt, so daß das Kleinkind zwanglos beim Aufstützen der Hände auf die Auflagefläche 5 den Kopf heben und bewegen kann. Das Kleinkind liegt mit seinem Gesäß an der hinteren Erhebung 8 an, wobei die Beine den rückwärtigen Fortsatz 6 umgreifen, so daß sich das Kleinkind mit seinen Füßen auf dem Boden abstützt und durch Strampelbewegungen das Rollgerät 1 nach vorne bewegen kann.

Wie aus Fig. 2 ersichtlich, ist die Schale 2 von unten gesehen konkav ausgebildet, wodurch sich seitliche Ränder 10 ergeben, die gleichzeitig im vorderen und seitlichen Bereich der Aufnahmefläche 5 als Stoßfänger 10' dienen. Im vorderen Bereich der Auflagefläche 5 kann im wesentlichen parallel zu dem Stoßfänger 10' noch ein nach innen versetzter Griffwulst 11 vorgesehen sein, dessen Lage so ausgebil det ist, daß auch dann, wenn das Kleinkind diesen Griffwulst erfaßt, seine Hände noch hinter dem Stoßfänger 10' liegen, so daß eine Verletzung beim Anfahren von Gegenständen vermieden wird.

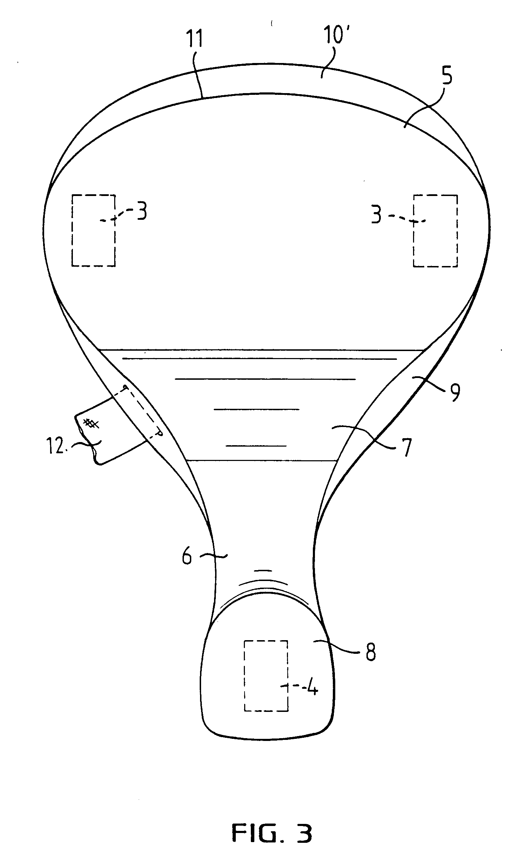

Die Auflagefläche 5 ist so groß ausgebildet, daß das Kleinkind mit den Händen praktisch nicht über den Rand der Auflagefläche greifen kann. Gleichzeitig sind auch die Vorderräder, wie schematisch in Fig. 3 gezeigt an der Unterseite der Schale ein wenig nach innen versetzt, so daß jedes Verletzungsrisiko ausgeschaltet ist. Das Übergreifen wird zumindest teilweise auch durch den in die Auflagefläche 5 hineinreichenden Wulst 9 vermieden.

Wie aus Fig. 1 ersichtlich, liegt das Kleinkind auf dem Rollgerät in einer physiologisch günstigen Haltung und ist gegen Abrutschen und Herunterrollen gesichert. Es ist jedoch ohne weiteres möglich, noch im Bereich der Wülste 9 Gurte 12 anzubringen, die über die Rückenpartie des Kindes geführt werden. An diesen Gurt 12 kann dann z.B. noch ein weiterer Gurt angebracht werden, den ein Elternteil hält, z.B. dann, wenn das Rollgerät nicht im Hause benutzt wird. Zum Haltenund Führen durch die Eltern kann auch ein in Fig. 1 nur angedeuteter Haltegriff 13 verwendet werden, der zum Beispiel mit zwei Zinken in entsprechende Schlitze 14 am hinteren Rand der Erhebung 8 einsteckbar ist.

Wird das Rollgerät von einem Kleinkind mit einem Alter von wenigen Wochen benutzt, so ist es zweckmäßig, die Vorderund Hinterräder 3 und 4 nicht lenkbar auszugestalten, so daß das Rollgerät nur im Geradeausbetrieb fortbewegt werden kann. Für die Vorderräder kann dann noch, wie in den Fig. 4 und 5 schematisch dargestellt, eine Fliehkraftbremse 15 vorgesehen werden. Solche Fliehkraftbremsen bestehen aus einer Vielzahl von auf der Radachse 16 gelagerten länglichen federnden Streifen 17, die in eine um die Radachse 16 koaxiale Ausnehmung 18 im Rad eingreifen. Die Ausnehmung und die Enden der Streifen 17 sind mit einem Friktionsmaterial belegt. Erreicht das Rollgerät eine zu hohe Geschwindigkeit, so werden die Streifen durch die Fliehkraft mit ihren vorderen Enden ausgelenkt und gegen das Friktionsmaterial in der Ausnehmung gedrückt. Hierdurch findet eine gewisse Bremsung statt.

Aus der Fig. 4 ist noch ersichtlich, daß die Vorderräder z.B. mit einer Starrachse miteinander verbunden werden können.

In Fig. 2 ist für das Hinterrad 4 eine Höhenverstellung 21 vorgesehen. Mit dieser Höhenverstellung kann der Abstand der Schale vom Boden verändert werden, um dem Wachstum des Kleinkindes gerecht zu werden. Die Radhalterung weist in diesem Falle einen nach oben weisenden Schraubzapfen 22 auf, der in eine im Bereich der Erhebung 8 an der Unterseite der Schale befestigte Schraubhülse 23 eingreift. Eine Verdrehsicherung kann auf übliche Weise z.B. mit Hilfe eines hier nicht gezeigten Splints erfolgen. Selbstverständlich sind andere Höhenverstellungen möglich, so z.B. mit Hilfe einer schwenkbar gelagerten Einarmschwinge. Eine solche Höhenverstellung kann ebenfalls für die Vorderräder 3 vorgesehen werden. Es hat sich jedoch herausgestellt, daß eine solche Höhenverstellung im vorderen Bereich der Schale nicht unbedingt nötig ist.

Wenn die Kleinkinder ein gewisses Alter erreichen, von z.B. drei bis sechs Monaten, so kann auch ein im gewissen Grade lenkbares Rollgerät verwendet werden.

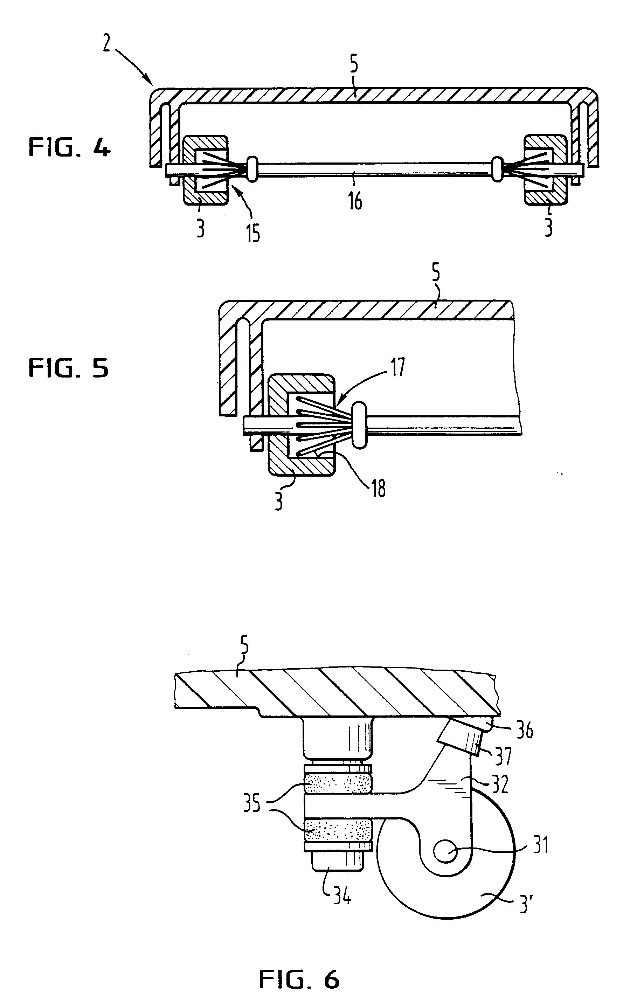

Das Rollgerät wird hierbei durch Gewichtsverlagerung gelenkt, wie dieses z.B. bei sogenannten Rollbrettern für Jugendliche bekannt ist. Eine schematische Darstellung der lenkbaren Vorderräder ist in Fig. 6 gezeigt. Jedes Vorderrad, bevorzugt jeweils ein Radpaar 3′ ist mit seiner Achse 31 in einem L-Profil 32 gelagert. Der eine Schenkel des L-Profiles 32 ist drehbar um einen Bolzen 34 gelagert, der mit der Unterseite der Schale des Rollgerätes im Bereich der Auflagefläche 5 verbunden ist. Zu beiden Seiten dieses Schenkels sind auf den Bolzen 34 Gummipolster 35 aufgesteckt. Der andere Schenkel des L-Profiles ist als Zapfen ausgebildet und greift in eine Hülse 36 an der Unterseite der Auflagefläche 5 ein. Zwischen Hülse 36 und dem Schenkel ist noch eine Gummimanschette 37 vorgesehen. In der Hülse 36 kann der Schenkel durch die Gummimanschette 37 gedämpft schwenken.

Das beschriebene Rollgerät unterstützt den natürlichen Drang jedes Kleinkindes zur Fortbewegung. Das Kleinkind versteht es sehr schnell, sich froschartig oder alternierend vorwärts zu bewegen, sobald es auf das Rollgerät gelegt wird, und beobachtet interessiert die Gegenstände seiner sich ihm neu darbietenden Umgebung. Durch die vordere Verbreiterung der Schale ist ein Aufstützen der Hände und ein Hantieren der Hände auf der Auflagefläche möglich. Dadurch wird eine Kräftigung des Oberkörpers und die daraus resultierende Rumpf- und Kopfkontrolle erzielt, was für die spätere Aufrichtung des Kleinkindes wesentlich ist. Insgesamt wird die motorische Entwicklung des Kleinkinds durch die Bedienung des Rollgerätes physiologisch gefördert, die dabei gewonnenen Fertigkeiten begünstigen die gesamte körperliche, motorische und geistige Entwicklung. Auch für die Therapie behinderter Kinder und für eine Skoliose-Prophylaxe ist das Rollgerät einsetzbar und förderlich.

**Patentansprüche**

1. Rollgerät für Kleinkinder, mit einer Schale, auf deren Oberseite das Kleinkind bäuchlings liegt und deren rückwärtiges Ende sich nach hinten verjüngt und einen mittigen Fortsatz bildet, an dessen Seite die Füße des Kleinkindes vorbeigreifen und auf den Boden gelangen, wobei auf der Unterseite der Schale drei Räder oder Radsätze vorgesehen sind, von denen zwei unter dem vorderen Teil und eines unter dem rückwärtigen Fortsatz angeordnet sind, dadurch gekennzeichnet, daß der vordere Bereich der Schale (2) den Konturen eines Ovals folgt und als im wesentlichen horizontale breite Auflagefläche (5) für die Hände des Kleinkindes ausgebildet ist, daß Fortsatz (6) und Auflagefläche (5) durch eine von dem Fortsatz sich kontinuierlich verbreiternde und flüssig in die Kontur des Ovals der Auflagefläche (5) übergehende Stützfläche (7) miteinander verbunden sind, und daß die beiden vorderen Räder (3) auf der Unterseite der Auflagefläche (5) nach innen versetzt und das Hinterrad (4) am hinteren Ende des rückwärtigen Ende des rückwärtigen Fortsatzes (6) angeordnet sind.

2. Rollgerät nach Anspruch 1, dadurch gekennzeichnet, daß die große Achse des die vordere Auflagefläche (5) definierenden Ovals senkrecht zur Mittellängsachse (A) des Rollgerätes (1) gelegen ist.

3. Rollgerät nach Anspruch 1 oder 2, dadurch gekennzeichnet, daß der rückwärtige Fortsatz (6) eine ebenfalls im wesentlichen horizontale Oberfläche aufweist, die jedoch tiefer gelegen ist als diejenige der Auflagefläche (5) für die Hände des Kleinkindes, und daß die Stützfläche (7) zwischen dem rückwärtigen Fortsatz (6) und der Auflagefläche (5) stetig ansteigt.

4. Rollgerät nach einem der vorhergehenden Ansprüche, dadurch gekennzeichnet, daß die Schale (2) im Bereich der Stützfläche (7) seitliche, nach oben weisende Begrenzungswulste (9) aufweist.

5. Rollgerät nach einem der vorhergehenden Ansprüche, dadurch gekennzeichnet, daß am hinteren Ende des rückwärtigen Fortsatzes (6) eine Erhebung vorgesehen ist.

6. Rollgerät nach einem der vorhergehenden Ansprüche, dadurch gekennzeichnet, daß die Schale mit einem seitlichen, nach unten weisenden Rand (10) versehen ist, der im vorderen und seitlichen Bereich der Auflagefläche (5) als Stoßfänger (10′) ausgebildet ist.

7. Rollgerät nach einem der vorhergehenden Ansprüche, dadurch gekennzeichnet, daß die Auflagefläche (5) mit einem Griffwulst (11) versehen ist, der innerhalb des äußeren Randes der Auflagefläche (5) gelegen ist.

8. Rollgerät nach den Ansprüchen 6 und 7, dadurch gekennzeichnet, daß der Griffwulst (11) im wesentlichen parallel zu dem ovalen Verlauf des Stoßfängers (10′) gelegen ist.

9. Rollgerät nach Anspruch 4, dadurch gekennzeichnet, daß an den seitlichen Begrenzungswulsten (9) ein Gurt (12) befestigt ist.

10. Rollgerät nach Anspruch 1, dadurch gekennzeichnet, daß die Räder (3, 4) ungelenkte Räder sind.

11. Rollgerät nach Anspruch 10, dadurch gekennzeichnet, daß zumindest das Hinterrad (4) mit einer Einrichtung (21) zur Höhenverstellung verbunden ist.

12. Rollgerät nach Anspruch 10, dadurch gekennzeichnet, daß zumindest die Vorderräder (3) eine Einrichtung (15, 17, 18) zur Begrenzung der Rollgeschwindigkeit des Rollgerätes (1) aufweisen.

13. Rollgerät nach Anspruch 12, dadurch gekennzeichnet, daß die Einrichtung zum Begrenzen der Rollgeschwindigkeit eine Fliehkraftbremse (15, 17, 18) aufweist.

14. Rollgerät nach Anspruch 13, dadurch gekennzeichnet, daß die Fliehkraftbremse (15) mit der Radachse (16) verbundene elastische Stäbe (17) aufweist, die in eine zur Radachse (16) koaxiale Ausnehmung (18) des Rades (3) eingreifen, und daß die in diese Ausnehmung (18) eingreifenden Stäbe (17) und die Ausnehmung (18) mit einem Friktionsmaterial versehen sind.

15. Rollgerät nach Anspruch 1, dadurch gekennzeichnet, daß die Achsen der Vorderräder (3') über einen Puffer (31) aus elastischem Material, vorzugsweise einen Gummipuffer mit der Unterseite der Auflagefläche (5) verbunden sind, so daß das Rollgerät (1) durch Gewichtsverlagerung lenkbar ist.


**Revendications**

1. Dispositif à roulettes pour jeunes enfants comportant une coquille sur la face supérieure de laquelle le jeune enfant est allongé sur le ventre et dont l'extrémité arrière se rétrécit vers l'arrière pour former un prolongement médian aux côtés duquel les pieds de l'enfant passent pour parvenir sur le sol, trois roues ou jeux de roues étant prévus sur la face inférieure de la coquille, dont deux sont disposés sous la partie antérieure et un au-dessous du prolongement arrière, caractérisé en ce que la zone avant de la coquille (2) suit les contours d'un oval et est formée sensiblement de larges surfaces portantes horizontales (5) destinées à recevoir les mains du jeune enfant, en ce que le prolongement (6) et les surfaces portantes (5) sont reliées par une surface d'appui (7) s'élargissant à partir du prolongement de manière continue et fluide en suivant les contours de l'oval de la surface portante (5), et en ce que les deux roues avant (3) sont disposées décalées vers l'intérieur sur la face inférieure de la surface portante (5) et la roue arrière (4) est disposée à l'extrémité arrière du prolongement arrière (6).

2. Dispositif à roulettes selon la revendication 1, caractérisé en ce que le grand axe de l'oval définissant la surface portante avant (5) est situé perpendiculairement à l'axe longitudinal médian (A) du dispositif à roulettes.

3. Dispositif à roulettes selon la revendication 1 ou 2, caractérisé en ce que le prolongement arrière (6) présente également une surface sensiblement horizontale qui est toutefois plus basse que celle de la surface portante (5) pour les mains du jeune enfant, et en ce que les surfaces d'appui (7) entre le prolongement arrière (6) et la surface portante (5) vont en hauteur croissante.

4. Dispositif à roulettes selon l'une des revendications précédentes, caractérisé en ce que la coquille (2) présente dans la zone des surfaces d'appui (7) des renflements (9) de délimitation latéraux dirigés vers le haut.

5. Dispositif à roulettes selon l'une des revendications précédentes, caractérisé en ce qu'il est prévu une élévation à l'extrémité arrière du prolongement arrière (6).

6. Dispositif à roulettes selon l'une des revendications précédentes, caractérisé en ce que la coquille est munie d'un bord latéral (10) dirigé vers le bas qui est formé comme un butoir (10') dans la zone antérieure et latérale de la surface portante (5).

7. Dispositif à roulettes selon l'une des revendications précédentes, caractérisé en ce que la surface portante (5) est munie d'un bourrelet de retenue (11) qui est situé en deça du bord extérieur de la surface portante (5).

8. Dispositif à roulettes selon l'une des revendications précédentes, caractérisé en ce que le bourrelet de retenue (11) est sensiblement parallèle au contour oval du butoir (10').

9. Dispositif à roulettes selon la revendication 4, caractérisé en ce qu'une ceinture (12) est fixée sur les renflements de délimitation latéraux.

10. Dispositif à roulettes selon la revendication 1, caractérisé en ce que les roues (3, 4) sont des roues non guidées.

11. Dispositif à roulettes selon la revendication 10, caractérisé en ce qu'au moins la roue arrière (4) est reliée à un organe (21) de réglage de la hauteur.

12. Dispositif à roulettes selon la revendication 10, caractérisé en ce qu'au moins les roues avant (3) présentent un organe (15, 17, 18) de limitation de la vitesse de roulement du dispositif à roulettes (1).

13. Dispositif à roulettes selon la revendication 12, caractérisé en ce que l'organe de limitation de la vitesse de roulement présente un frein centrifuge (15, 17, 18).

14. Dispositif à roulettes selon la revendication 13, caractérisé en ce que le frein centrifuge (15) présente des barres (17) élastiques reliées avec l'axe (16) de la roue, qui s'engagent dans un évidement (18) de la roue (3) coaxial à l'axe (16) de la roue, et en ce que les barres (17) engagées dans cet évidement (18) et l'évidement (18) sont pourvus d'un matériau pour friction.

15. Dispositif à roulettes selon la revendication 1, caractérisé en ce que les axes des roues avant (3') sont reliés par un tampon (31) de matériau élastique, de préférence un tampon de caoutchouc, avec la face inférieure de la surface portante (5) de sorte que le dispositif à roulettes (1) est dirigeable par déplacement du poids.

## Claims

1. A rolling apparatus for small children having a shell on whose upper side the stomach of a small child lies, and whose rearward end narrows to form a central extension on whose sides the feet of the small child can slide over to reach the ground, and with the underside of the shell provided with three wheels or rollers of which two are disposed under the front part and one under the rearward extension, characterized in that the forward region of the shell (2) follows the contours of an oval and is formed as a substantially horizontal broad contact surface (5) for the hands of the small child, the extension (6) and the contact surface (5) are interconnected by a supporting surface (7) continuously broadening from the extension and passing smoothly into the contour of the oval of the contact surface (5), and the two front wheels (3) are offset inwardly on the underside of the contact surface (5) and the rear wheel (4) is disposed at the tail end of the rearward extension (6).

2. The rolling apparatus of claim 1, characterized in that the large axis of the oval defining the forward contact surface (5) is perpendicular to the longitudinal center axis (A) of the rolling apparatus (1).

3. The rolling apparatus of claim 1 or 2, characterized in that the rearward extension (6) has a surface which is likewise substantially horizontal but situated lower than that of the contact surface (5) for the hands of the small child, and the supporting surface (7) rises continuously between the rearward extension (6) and the contact surface (5).

4. The rolling apparatus of one of the foregoing claims, characterized in that the shell (2) has lateral, upwardly directed limiting ridges (9) in the region of the supporting surface (7).

5. The rolling apparatus of one of the foregoing claims, characterized in that an elevation is provided at the tail end of the rearward extension (6).

6. The rolling apparatus of one of the foregoing claims, characterized in that the shell is provided with a lateral, downwardly directed rim (10) which is formed as a shock absorber (10') in the front and side regions of the contact surface (5).

7. The rolling apparatus of one of the foregoing claims, characterized in that the contact surface (5) is provided with a gripping ridge (11) which is situated within the outer rim of the contact surface (5).

8. The rolling apparatus of claims 6 and 7, characterized in that the gripping ridge (11) is substantially parallel to the oval course of the shock absorber (10').

9. The rolling apparatus of claim 4, characterized in that a belt (12) is attached to the lateral limiting ridges (9).

10. The rolling apparatus of claim 1, characterized in that the wheels (3, 4) are unsteered wheels.

11. The rolling apparatus of claim 10, characterized in that at least the rear wheel (4) is connected with a vertical adjustment means (21).

12. The rolling apparatus of claim 10, characterized in that at least the front wheels (3) have a means (15, 17, 18) for limiting the rolling speed of the rolling apparatus (1).

13. The rolling apparatus of claim 12, characterized in that the means for limiting the rolling speed has a centrifugal brake (15, 17, 18).

14. The rolling apparatus of claim 13, characterized in that the centrifugal brake (15) has elastic rods (17) connected with the wheel axle (16) and engaging a recess (18) in the wheel (3) coaxial with the wheel axle (16), and the rods engaging this recess (18) and the recess (18) are provided with a frictional material.

15. The rolling apparatus of claim 1, characterized in that the axles of the front wheels (3') are connected with the underside of the contact surface (5) via a buffer (31) made of elastic material, preferably a rubber buffer, so that the rolling apparatus (1) can be steered by shifting one's weight.

FIG. 1

FIG. 2

EP 0 324 814 B1

FIG. 3

FIG. 4

FIG. 5

FIG. 6